(19) **Europäisches Patentamt**

**European Patent Office**

**Office européen des brevets**

(11) Veröffentlichungsnummer: **0 266 646 B1**

# (12) EUROPÄISCHE PATENTSCHRIFT

(45) Veröffentlichungstag der Patentschrift: **04.03.92**

(21) Anmeldenummer: **87115658.4**

(22) Anmeldetag: **26.10.87**

(51) Int. Cl.⁵: **B23Q 3/155**

(54) **Werkzeugspeicher für Werkzeugmaschinen und Verfahren zu seinem Betrieb.**

(30) Priorität: **03.11.86 CH 4344/86**

(43) Veröffentlichungstag der Anmeldung:
**11.05.88 Patentblatt 88/19**

(45) Bekanntmachung des Hinweises auf die
Patenterteilung:
**04.03.92 Patentblatt 92/10**

(84) Benannte Vertragsstaaten:
**AT BE CH DE ES FR GB IT LI NL SE**

(56) Entgegenhaltungen:
DE-A- 3 001 373    FR-A- 2 105 259
FR-A- 2 543 467    GB-A- 2 157 996
US-A- 3 779 391    US-A- 4 577 389

(73) Patentinhaber: **Starrfräsmaschinen AG**
**Seebleichestrasse 61**
**CH-9400 Rorschacherberg(CH)**

(72) Erfinder: **Novak, Peter**
**Oberstrasse 16**
**CH-8274 Tägerwilen(CH)**

(74) Vertreter: **EGLI-EUROPEAN PATENT ATTOR-**
**NEYS**
**Horneggstrasse 4**
**CH-8008 Zürich(CH)**

## Beschreibung

Die Erfindung betrifft einen Werkzeugspeicher für Werkzeugmaschinen nach dem Oberbegriff des Patentanspruchs 1 und ein Verfahren zum Betrieb desselben

Werkzeugspeicher werden vor allem bei Werkzeugmaschinen für die numerisch gesteuerte Bearbeitung von Werkstücken, insbesondere in Bearbeitungszentren, verwendet und sind in verschiedenen Ausführungen bekannt. Eine bekannte Grundform des Werkzeugspeichers ist das scheibenförmige Tellermagazin, an dessen Umfang die Werkzeuge, meistens zusammen mit einem Werkzeughalter, trommel- oder sternförmig angeordnet sind. Bei sternförmiger Anordnung der Werkzeuge kann eine Erhöhung der Zahl der Speicherplätze dadurch erreicht werden, dass mehrere solcher Tellermagazine lagenweise aufeinander geschichtet sind, siehe beispielsweise die DE-C-1 912 369. Bei diesem Werkzeugspeicher sind die Werkzeuge in axial verschiebbaren Blöcken gelagert, mit Hilfe welcher die Werkzeuge in eine Werkzeugübergabestellung verfahrbar sind, an welcher sie vom Werkzeugwechsler aus dem Magazin entnommen oder in dasselbe zurückgelegt werden können. Nachteilig ist jedoch der verhältnismässig grosse Aufwand für die verschiebbare Lagerung der Blöcke und des Verschiebemechanismus.

Zwar kann dieser Aufwand dadurch verringert werden, dass die Werkzeuge in mehreren Etagen axial auf einer rotierenden Trommel angeordnet sind und mit ihrer Längsachse tangential zu einer zum Zylinder konzentrischen Kreisbahn liegen, so dass sie durch eine Greifervorrichtung entnommen und eingelegt werden können. Bei dieser Anordnung ist jedoch die Zahl der am Umfang der Trommel anzuordnenden Werkzeuge verhältnismässig gering (CH-A-556 712).

FR-A-2 105 259 beschreibt ein Magazin für zu bearbeitende Werkstücke mit einem Sockel und darauf montierten höhenverstellbaren Säulen. Die Säulen sind durch eine Platte am oberen Ende miteinander verbunden und stützen einen aus Streben gebildeten Rotor ab, welcher Kassetten zur Aufnahme von Werkstücken trägt. Die Kassetten sind jedoch nicht beweglich am Rotor gelagert, so dass zur Uebergabe oder zur Entnahme eines Werkstückes jeweils der gesamte Rotor bewegt werden muss.

Eine zweite Grundform eines Werkzeugspeichers ist das Kettenmagazin, bei welchem die Werkzeuge parallel oder senkrecht zu den Drehachsen eines umlaufenden Kettentriebes gelagert sind. Reicht aber die Zahl der Werkzeugplätze eines solchen Kettenmagazins nicht aus, muss ein weiteres Magazin oder müssen weitere Magazine an der Werkzeugmaschine aufgestellt werden.

Auch hier ist der Platzbedarf und der Aufwand zur Entnahme und Rückgabe der Werkzeuge verhältnismässig gross.

Aus der DE-A-3 001 373 ist es auch bekannt, zwischen einem Kettenmagazin und einer Arbeitsstation einen Schleppförderer als Zwischenspeicher vorzusehen, bei welchem jeweils eine ein Werkzeug enthaltende Haltevorrichtung mit einer Laufkatze verbunden wird, die dann längs einer kreisförmigen Laufplatte durch einen Mitnehmerring gegen eine Wartestation befördert wird, bis sie diese erreicht oder an eine andere Laufkatze stösst. Zwischen der Wartestation und der Arbeitsstation, in der das Werkzeug mit einem Antrieb verblockt wird, wird ein Sektor von Laufkatzen frei gehalten.

Weiter sind sogenannte Flächenspeicher bekannt, bei denen die Werkzeuge auf einer ebenen, meistens senkrechten Fläche angeordnet sind und von einem Portallader entnommen und zurückgegeben werden. Damit kann eine grosse Werkzeugspeicherkapazität erreicht werden und zudem lässt sich jedes Werkzeug über den Portallader relativ schnell erreichen, ohne dass die gesamte Werkzeugmasse bewegt werden müsste wie z.B. beim Teller oder beim Kettenmagazin. Allerdings ist der Platzbedarf sehr gross, da jedes Werkzeug ausser seiner eigenen Platzfläche noch zusätzliche, unbenützte Zugriffsflächen für den Portallader benötigt, so dass sich für den Portallader grosse Verfahrwege ergeben. Diese Lösung ist zudem für Mehrspindelmaschinen kaum anwendbar, da die gleichzeitige Entnahme mehrerer Werkzeuge aus dem Flächenspeicher problematisch ist.

Aehnlich ist die Situation bei Speichern (s. Z.B. US-3 779 391), bei welchen die Werkzeuge radial ausgerichtet in auf einer drehbaren Trommel befestigten Werkzeugmagazinen angeordnet sind.

Hier setzt die Erfindung ein, der die Aufgabe zugrundeliegt, einen Werkzeugspeicher der zuletzt beschriebenen Art so weiterauszugestalten, dass eine grosse Werkzeugzahl auf kleinster Fläche bei schneller Werkzeug-Vorlage und -Zugriffsmöglichkeit erreicht werden kann.

Diese Aufgabe wird gemäss der Erfindung durch die Merkmale im Kennzeichen des Anspruchs 1 gelöst.

Die Erfindung umfasst auch ein Verfahren, mit welchem der erfindungsgemässe Werkzeugspeicher optimal betrieben werden kann. Diese Aufgabe wird gemäss der Erfindung dadurch gelöst, dass zur Entnahme eines Werkzeuges durch ein Handhabungsgerät die Werkzeugmagazine zunächst durch die erste Greifervorrichutng an dem Sektor blockiert und die zweite Greifervorrichtung durch den Rotor zu dem das benötigte Werkzeug tragenden Werkzeugmagazin bewegt und dieses Magazin durch die zweite Greifervorrichtung mit dem Rotor verbunden wird, worauf nach Oeffnen der ersten Greifervorrichtung die Werkzeugmagazine so lange bewegt werden, bis das gewählte Werkzeugmagazin an der Entnahmestelle angehalten und durch die erste Greifervorrichtung festgehalten wird.

Ein Ausführungsbeispiel ist in der Zeichnung dargestellt und nachfolgend beschrieben. Es zeigen:

Fig. 1      Eine schematische Seitenansicht eines Werkzeugspeichers,

Fig. 2      eine schematische Draufsicht des Werkzeugspeichers nach Fig. 1,

Fig. 3      einen Längsschnitt des Werkzeugspeichers nach Fig. 1 mit einem Werkzeugmagazin, das durch eine erste Greifervorrichtung in der Belade- und Entlade-Stellung gehalten ist,

Fig. 4      ein schematisch dargestellter Längsschnitt des Werkzeugspeichers nach Fig. 1, in welchem die Funktion der zweiten Greifervorrichtung zum Fixieren eines Werkzeugmagazins an einem Rotor dargestellt ist,

Fig. 5      die Darstellung einiger Zugriffseinrichtungen am Werkzeugspeicher,

Fig. 6      eine schematisch dargestellte Draufsicht des Werkzeugspeichers nach Fig. 1 zur Erläuterung seines Betriebes,

Fig. 7      einen Schnitt eines Werkzeugmagazins mit einem darin gelagerten Werkzeug und

Fig. 8      den Werkzeugspeicher nach Fig. 1 mit ausgeschwenktem Werkzeugmagazin.

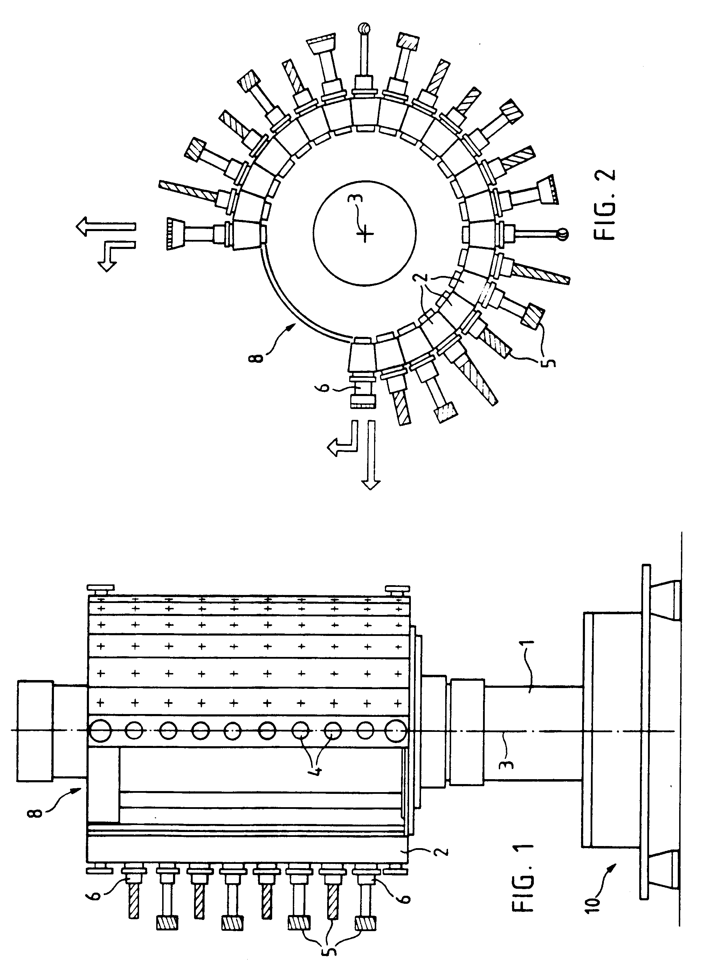

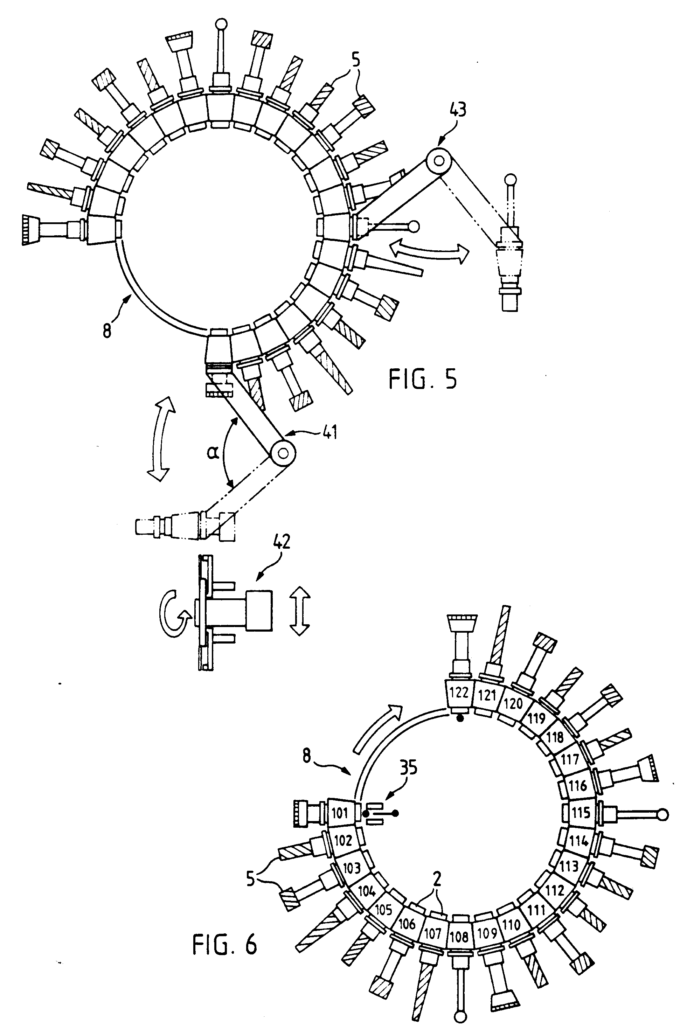

Der in Fig. 1 und 2 dargestellte Werkzeugspeicher weist eine zylindrische Säule 1 auf, um welche eine Anzahl Werkzeugmagazine 2 aneinander anliegend, ringförmig um die Säulenachse 3 angeordnet sind. Die Werkzeugmagazine 2 erstrecken sich axial parallel zur Säulenachse 3 und weisen eine Anzahl nebeneinanderliegender Werkzeugplätze 4 auf, in denen Werkzeuge 5 mit Werkzeughaltern 6 in radialer Anordnung gelagert sind, wie noch anhand von Fig. 6 beschrieben wird. An den Enden der Werkzeugmagazine 2 sind Greiferplatten 7 angeordnet, die auch für die Codierung benützt werden können.

Aus Fig. 2 ist erkennbar, dass nur so viel Werkzeugmagazine 2 ringförmig nebeneinander angeordnet werden, dass ein magazinfreier Sektor 8 gebildet werden kann, welcher einen Winkel von etwa 60 - 90° aufweisen kann.

Die Säule 1 weist ein Fundament 10 auf, welches als Fuss oder in das Werkzeugmaschinenbett integrierte Konstruktion ausgebildet sein kann. Die Säule 1 kann mit dem Fundament 10 formschlüssig, z.B. durch Schweissen oder Verstiften, oder kraftschlüssig durch Klemmen verbunden sein. Beim letztgenannten Fall ergibt sich der Vorteil einer stufenlosen, radialen Einstellung des gesamten Werkzeugspeichers auf die Peripheriegegebenheiten.

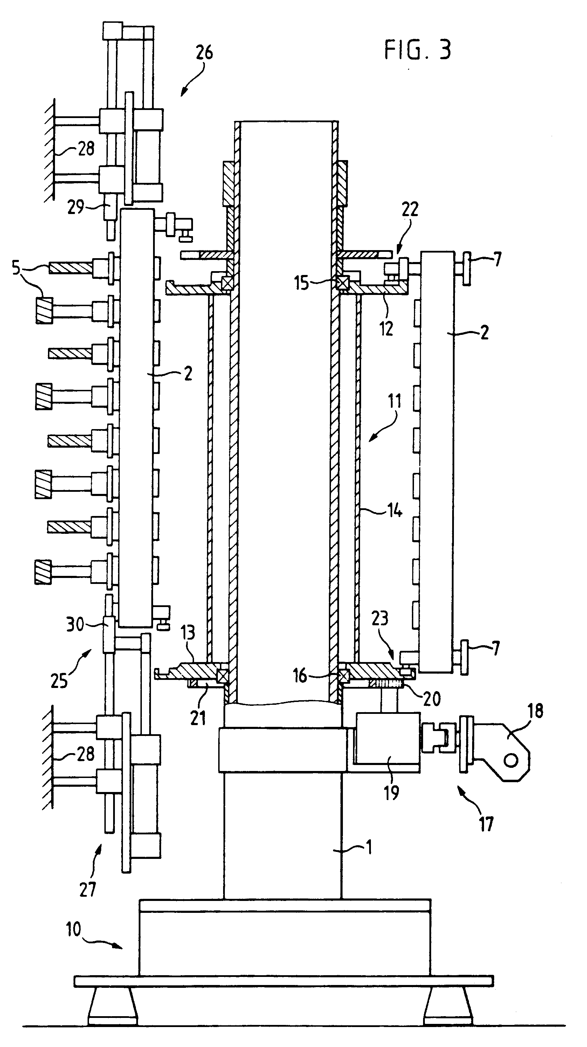

Aus Fig. 3 ist ersichtlich, dass die Säule 1 Träger eines walzenförmigen Rotors 11 ist, der sich aus einer obern und einer untern ringförmigen Laufbahn 12, 13 und einem, diese Laufbahnen 12, 13 verbindenden koaxialen Walze 14 zusammensetzt und an der Säule 1 mittels Lagern 15, 16 drehbar gelagert ist.

Der Rotor 11 wird durch einen motorischen Antrieb 17, z.B. einem Hydromotor 18 und einem Reduktionsgetriebe 19, in Drehung versetzt, wobei ein Antriebsritzel 20 mit einem koaxial zur Säulenachse 3 angeordneten, an der unteren Laufbahn 13 befestigten Zahnrad kämmt. Der Antrieb 17 kann im Uhrzeiger- und Gegenuhrzeigersinn, in Stufen oder stufenlos geregelt, drehen.

Die Werkzeugmagazine 2, von denen jedes eine Anzahl Werkzeuge 5 trägt, die in einer definierten Position innerhalb des Magazins fixiert sind, sind mit zwei Laufwerken 22, 23, die im wesentlichen aus Laufrollen und Stützrollen bestehen, auf den Laufbahnen 12, 13 drehbar abgestützt und ermöglichen eine Relativbewegung am Rotor 11. Die Werkzeugmagazine 2 sind hierbei auf den Laufbahnen 12, 13 des Rotors 11 hängend über den Umfang angeordnet.

Aus Fig. 3 ist weiter eine erste Greifervorrichtung 25 erkennbar, die im wesentlichen aus zwei, in Magazinlängsrichtung angeordneten, gegenüberliegenden Hubeinheiten 26, 27, z.B. Pneumatik- oder Hydraulik-Zylinder besteht, welche an einem Gestell 28 des Werkzeugspeichers ortsfest abgestützt sind. Die Hubeinheiten 26, 27 weisen am Ende einen Greifer 29, 30 auf, mit denen das jeweils vorgelegte Werkzeugmagazin 2 ergriffen, zentriert und einem Werkzeugwechsler in geeigneter Höhe vorgelegt wird. Mit den Hubeinheiten 26, 27 können mehrere Hubpositionen realisiert werden.

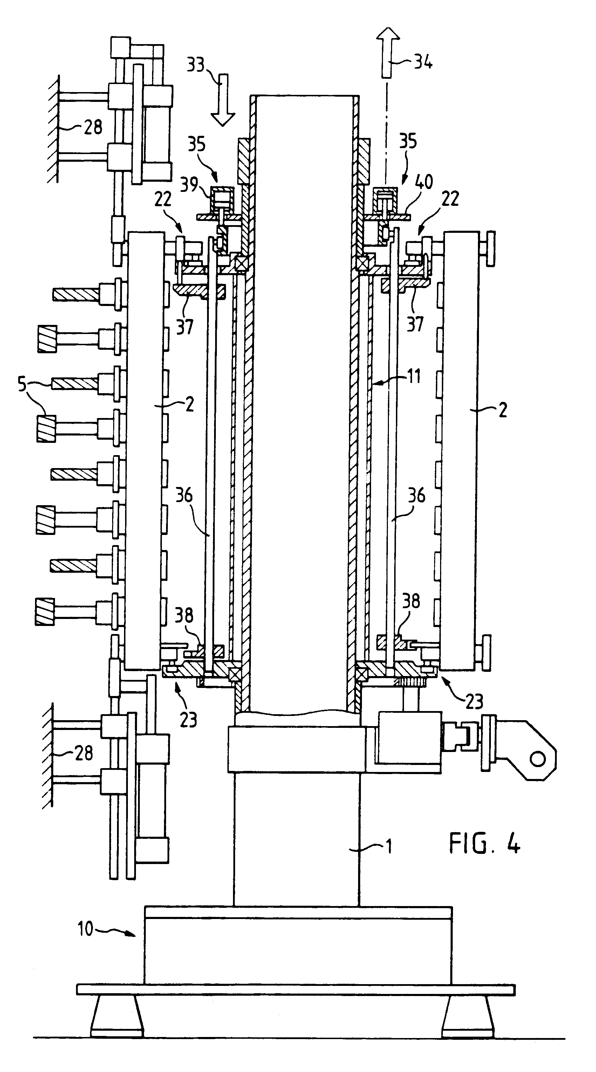

Während die erste Greifervorrichtung 25 ortsfest am Gestell 28 des Werkzeugspeichers befestigt ist, ist aus Fig. 4 eine zweite Greifervorrichtung 35 erkennbar, welche auf dem Rotor 11 gelagert ist und mit welcher ein bestimmtes Werkzeugmagazin 2 gesucht und auf dem Rotor 11 befestigt werden kann. In Fig. 4 sind zwei zweite Greifervorrichtungen 35 dargestellt, jedoch ist es dieselbe Vorrichtung, die jedoch in zwei verschiedenen Stellungen dargestellt ist, siehe die beiden Pfeile 33, 34. Die zweite Greifervorrichtung 35 setzt sich aus einer Trägerstange 36 sowie aus einer obern und einer untern Greifergabel 37, 38 zusammen und wird durch ein Hubwerk 39, das auf einem am Rotor 11 gelagerten Steuerring 40 angeordnet ist, angehoben, siehe Pfeil 34. In dieser Stellung der zweiten Greifervorrichtung 35 fixieren die Greifergabeln 37, 38 die Laufwerke 22, 23 des gewählten Werkzeugmagazins 2, so dass es bei der Drehung des Rotors 11 zusammen mit diesem dreht.

In Fig. 4 sind einige Zugriffsmöglichkeiten dargestellt. Die kreisförmige Bauweise des Werkzeugspeichers und der beliebig anzuordnende magazinfreie Sektor 8 erlauben die Wahl des Werkzeugangriffes auf dem ganzen Umfang des Speichers. Da es vorteilhaft ist, die Werkzeuge nahe bei der Arbeitsspindel vorzulegen, damit nur kurze Strekken für den eigentlichen Werkzeugwechsel verbleiben, kann hier die Werkzeug-Zugriffsmöglichkeit zu einer Belade- und Entladestation 42 mit einem Vorlegearm 41 verwirklicht werden. Bei geeigneter Anordnung ist es auch möglich, auf den Vorlegearm 41 zu verzichten und den Werkzeugwechsel direkt mit der Belade- und Entladestation 42 vorzunehmen. Ein weiterer Vorlegearm 43 dient dazu, das Auswechseln eines Einzelwerkzeuges manuell in einer Nebenzeit vorzunehmen. Die eigentliche Funktion des Werkzeugspeichers ist hierbei trotzdem gewährleistet und die Werkzeugmaschine kann ihre Produktion aufrechterhalten. Damit der Belade- und Entladevorgang durchgeführt werden kann, befindet sich die erste Greifervorrichtung 25 an der Uebergabestelle mit der Belade-und Entladestation 42.

Der beschriebene Werkzeugspeicher weist eine hohe Speicherkapazität auf. Werden beispielsweise pro Werkzeugmagazin zehn Werkzeuge eingesetzt und werden am Umfang 22 Werkzeugmagazine 2 für Konus ISO 45 vorgesehen, ergibt dies eine maximale Speicherkapazität von 220 Werkzeugen. Jedoch ist es nicht nötig, diese volle Speicherkapazität auszunützen, sondern es kann auch nur die jeweils benötigte Werkzeugzahl vorgesehen werden. Dadurch wird die Funktionsweise des Speichers in keiner Weise beeinflusst. Vielmehr sind dann die Massen kleiner, die bewegt und beschleunigt werden müssen.

Anhand von Fig. 6 soll nun der Arbeitsablauf des Werkzeugspeichers beschrieben werden. In der Ausgangslage wird der Rotor 11 durch die Belade- und Entladestation 42 mit Werkzeugmagazinen 2 bestückt. Diese tragen einen Identifikationscode, welcher in die Maschinensteuerung eingelesen wird. Jede Kassette wird fortlaufend numeriert. Die Nummer besitzt in der Steuerung einen Querverweis zu dem Identifikationscode und somit zu dem Inhalt der Kassette.

Der Ablaufzyklus verläuft nun wie folgt:

a) Die erste Greifervorrichtung 25 (nicht dargestellt) hält das Werkzeugmagazin 101 fest.

b) Das Maschinenprogramm ruft die Vorlage eines Werkzeugmagazins, z.B. Nummer 115, auf.

c) Der Antrieb des Rotors mit der zweiten Greifervorrichtung 35 erhält einen Befehlsimpuls zum Drehen im Uhrzeigersinn, siehe Pfeil.

d) Das Werkzeugmagazin 101 ist von aussen festgehalten und alle übrigen Werkzeugmagazine sind an diesem gestaut. Da sich der Rotor dreht, bewegen sich die Laufwerke relativ zum Rotor, jedoch ohne dass die Werkzeugmagazine bewegt würden.

e) Die zweite Greifervorrichtung 35 bewegt sich jetzt mit dem Rotor von dem Magazin 101 zum Magazin 115 mit Eilganggeschwindigkeit.

f) Während der Fahrt zählt ein Indikator 50 die Magazine ab und meldet dies der Steuerung (hier wird die Differenz von 122 auf 115 gezählt).

g) Beim vorletzten Magazin, hier Nummer 116, wird aus dem Eilgang in die Positioniergeschwindigkeit geschaltet. Bei Erreichen des Magazins 115 wird die zweite Greifervorrichtung 35 exakt abgestellt und positioniert.

h) Durch die zweite Greifervorrichtung 35 wird das Magazin 115 formschlüssig mit dem Rotor verbunden.

i) Nach Freigabe des Magazins 101 durch Entfernen der ersten Greifervorrichtung wird der Rotor erneut beschleunigt.

j) Nun werden alle Magazine zwangsläufig mitbeschleunigt, welche sich in der Drehrichtung vor dem Magazin 116 befinden, hier also die Magazine 101 bis und mit 115.

k) Die Magazine 116 - 122 werden nur durch die Reibung beschleunigt. Dies ist vorteilhaft, da im Durchschnitt der Drehantrieb nicht das gesamte Anfahrspitzenmoment aufbringen muss. Inzwischen holt das stärker beschleunigte Magazin 101 das Magazin 122 ein, der magazinfreie Sektor ist jetzt zwischen den Magazinen 115 und 116 entstanden.

l) Das Magazin 115 nähert sich der Uebergabestelle mit der ersten Greifervorrichtung 25. Die Antriebsgeschwindigkeit wird auf Positioniergeschwindigkeit verringert. Alle Magazine, ausser Magazin 115, behalten wegen ihrer Trägheit die Geschwindigkeit bei bzw. verzögern nur über die Reibung, und bilden (selbsttätig) an der gewünschten Stelle wie bei der Ausgangslage den magazinfreien Sektor 8 für das Werkzeughandhabungsgerät.

m) Bei Ereichen der Uebergabeposition durch den Rotor und somit durch das Magazin 115 werden die Hubeinheiten 26, 27 der ersten Greifervorrichtung 25 geschlossen und diese heben das Magazin 115 in die gewünschte Höhe. Jetzt können die Werkzeuge durch das Handhabungsgerät aus verschiedenen Positionen des Magazins entnommen werden.

Der Ablaufzyklus kann nun wieder beim Abschnitt a) beginnen.

Bei einem Werkzeugspeicher wird der schnellen Vorlage und Zugriffsmöglichkeit erhebliche Bedeutung beigemessen. Dies ist besonders wichtig, wenn Operationen mit kurzen Bearbeitungszeiten aufeinanderfolgen. Für diesen Fall können die Werkzeuge nicht in der Nebenzeit bereitgestellt werden. Zu der eigentlichen Wechselzeit des Werkzeug-Handhabungsgerätes wird die Vorlagezeit zusätzlich addiert, was die Maschinenverfügbarkeit erneut verringert. Bei Werkzeugspeichern mit hoher bis sehr hoher Speicherkapazität wirkt sich diese Erscheinung besonders ungünstig aus.

Der beschriebene Werkzeugspeicher bedient sich eines zweidimensionlen Speicherfeldes, so dass bei Vorlegen eines Magazins alle Werkzeuge desselben gleichzeitig vorgelegt werden.

Geht man vom vorstehend genannten Beispiel mit zehn Werkzeugen pro Magazin aus, werden alle 80 mm pro Fahrweg des Rotors immer wieder zehn neue Werkzeuge vorgelegt. Um alle 220 Werkzeuge vorzulegen, benötigt der beschriebene Werkzeugspeicher eine Umdrehung, was einem Weg von ca. 2,5 m entspricht.

Aber auch die Zykluszeit kann beim beschriebenen Werkzeugspeicher optimiert werden. Dies wird durch die Relativbewegung zwischen den Magazinen und dem Rotor 11 erreicht. Wird ein Magazin gemäss Programmaufruf vorgelegt und durch die erste Greifervorrichtung 25 fixiert führt der Rotor unmittelbar die Suche nach dem nächsten aufgerufenen Magazin durch, ohne dass er das Werkzeug-Handhabungsgerät bei der parallel durchzuführenden Werkzeugentnahme behindert. Dadurch lassen sich sehr schnelle Magazin-Vorlegeperioden verwirklichen, welche zudem eine feste Werkzeug-Platzzuordnung ermöglichen und den Steuerungsaufwand wesentlich verringern.

Mit der Belade- und Entladestation kann das Beladen und Entladen der Einzelwerkzeuge von Hand oder durch einen Portallader optimiert werden. Um während eines solchen Werkzeug-Austausches aus dem Werkzeugspeicher einerseits die Werkzeugmaschine und andererseits den Bedienungsmann bzw. den Portallader nicht zu blockieren, bietet die Belade- und Entladestation eine zweckmässige Möglichkeit des Herausschwenkens des betroffenen Magazins. Dies wird vorteilhafterweise während einer günstigen Operationsfolge mit dem Belade- und Entladearm ausgeführt, welcher das Magazin aus dem Arbeitsbereich des Werkzeugspeichers in eine Belade-und Entladeposition bringt. Hier können die Werkzeuge ohne Behinderung der Maschinen-Hauptzeit mit eigenem Arbeitsrhythmus durch den Bedienungsmann bzw. den Portallader gewechselt werden.

Im weitern kann durch die Maschinensteuerung der günstigste Zeitpunkt für den Wechsel der ganzen Magazine festgelegt werden, damit auch zwischen den Operationen einzelne Magazine ohne Beeinflussung der Hauptzeit aus- und eingeladen werden können.

Es sei noch erwähnt, dass es nicht erforderlich ist, dass alle Magazine dieselbe Breite aufweisen. Werden Werkzeuge mit verhältnimässig grossem Durchmesser eingesetzt, können entsprechende Magazine mit grösserer Breite verwendet werden.

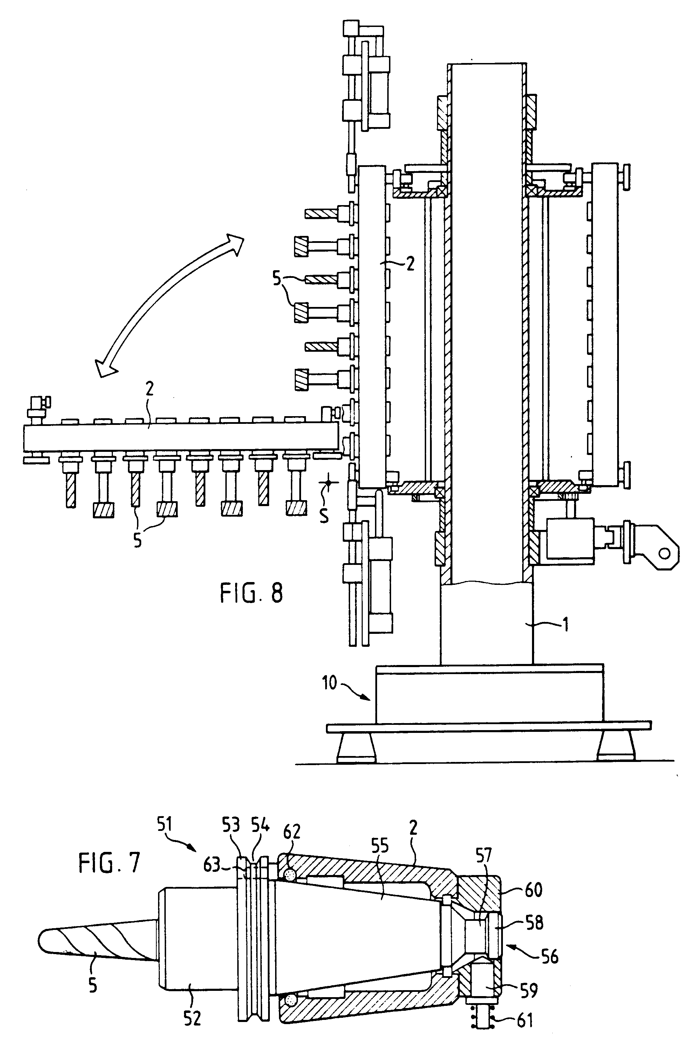

Aus Fig. 7 ist ein Schnitt eines Werkzeugmagazins 2 mit einem Werkzeug 5 dargestellt. Das Werkzeug ist in einem Werkzeughalter 51 gehalten, der einen Werkzeugspanner 52, einen Handhabungsring 53 mit einer Greifrille 54 und einem Werkzeug-Konus 55 aufweist.

Letzerer weist einen Haltezapfen 56 mit einem Hals 57 auf, der durch einen Endflansch 58 begrenzt und in den, ein in einem Haltering 60 geführten Arretierbolzen 58, mit einer Feder 61 eingreift. Am grösseren Durchmesser des Konus 55 ist der Werkzeughalter 51 durch einen im Werkzeugmagazin 2 gehaltenen elastischen O-Ring 62 federnd geführt und zudem durch einen Anschlagstift 62 positioniert. Durch diese Anordnung ist der Werkzeug halter 51 im Werkzeugmagazin 2 formschlüssig gehalten, kann aber nach Überwindung der Kraft der Arretierfeder 60 am Handhabungsring 53 gefasst und entfernt werden.

Bei den vorstehend beschriebenen Ausführungsbeispielen wurde vorausgesetzt, dass die Werkzeugvorlage bei vertikaler Anordnung der Magazine 2 vorgenommen wird. Wenn der direkte Zugriff mit dem Werkzeug-Wechsler, z.B. aus Platzgründen, nicht möglich ist oder es vorteilhafter ist, das Werkzeug in der Nähe der Arbeitsspindel der Werkzeugmaschine vorzulegen, wird hierfür der Vorlagearm eingesetzt. Genügt bei bestimmten Werkzeugmaschinen die am Speicher als Magazinhubvorlage ausgebildete erste Greifervorrichtung 25 nicht, kann der Vorlegearm entsprechend, z.B. mit einem Hub- oder einem Schwenkmechanismus ausgerüstet werden. Der Schwenkmechanismus erlaubt, siehe Fig. 8, das Werkzeugmagazin 2 um eine Schwenkachse S zu schwenken. Das Schwenken des Werkzeugmagazins 2 in radialer Richtung zum Speicher ist meistens bei Werkzeugmaschinen mit senkrechter Arbeitsspindel erforderlich. Es ist jedoch wegen des magazinfreien Sektors am Werkzeugspeicher auch möglich, die Schwenkachse S radial zum Werkzeugspeicher anzuordnen, so dass das Werkzeugmagazin 2 in tangentialer Richtung geschwenkt werden kann. Das Werkzeugmagazin 2 und die Werkzeugachsen liegen dann horizontal. Wesentlich ist jedoch, dass auch bei solchen Einsätzen der Werkzeugspeicher nicht geändert werden muss, sondern in seiner Standardausführung beibehalten werden kann.

## Patentansprüche

1. Werkzeugspeicher für Werkzeugmaschinen, insbesondere numerisch gesteuerte Bearbeitungsmaschinen zum Speichern von auf Werkzeugmagazinen (2) angeordneten Werkzeugen (5) und zur Entnahme und Rückgabe der Werkzeuge (5) mittels eines Handhabungsgerätes, mit einem ortsfesten Gestell (28) und einer bodenseitig befestigten senkrechten Säule (1), an welcher ein walzenförmiger Rotor (11), an dem die Werkzeugmagazine (2) befestigt sind, drehbar gelagert ist, **dadurch gekennzeichnet, dass** die Werkzeugmagazine (2) in Umfangsrichtung verschiebbar und aneinanderstossend mittels Laufwerken (22, 23), welche von kreisförmigen Laufbahnen (12, 13) an den Enden des Rotors (11) aufgenommen werden, an demselben aufgehängt sind, sodass sie anschliessend an eine Be- und Entladeposition für die Beladung und Entladung des Rotors mit Werkzeugmagazinen (2) und für den erleichterten Zugriff des Handhabungsgerätes auf die Werkzeuge (5) einen magazinfreien Sektor (8) bilden und ausserdem zwei Greifervorrichtungen vorhanden sind, von denen eine erste Greifervorrichtung (25) zur Fixierung eines Werkzeugmagazins (2) am Rand des magazinfreien Sektors (8) am ortsfesten Gestell (28) und eine zweite Greifervorrichtung (35) zum Suchen, Fixieren und Heranholen eines Werkzeugmagazins (2) zu der ersten Greifervorrichtung (25) auf dem Rotor (11) befestigt ist.

2. Werkzeugspeicher nach Anspruch 1, dadurch gekennzeichnet, dass die erste Greifervorrichtung (25) aus zwei Hubeinheiten (26, 27) zusammengesetzt ist, die an ihren Enden Greifer (29, 30) aufweisen, die an Greiferplatten (7) an den Enden der Werkzeugmagazine (2) zum Transport der Werkzeugmaglne in die Belade- und Entladeposition angreifen.

3. Werkzeugspeicher nach Anspruch 1, dadurch gekennzeichnet, dass die zweite Greifervorrichtung (35) sich aus einer Trägerstange (36) und aus an ihren Enden angeordneten Greifergabeln (37, 38) zusammengesetzt und mit einem am Rotor (11) angeordneten Hubwerk (39) verbunden ist, durch welches die zweite Greifervorrichtung in eine ein Werkzeugmagazin (2) am Rotor (11) fixierende Stellung (34) anhebbar ist.

4. Werkzeugspeicher nach einem der Ansprüche 1 bis 3, dadurch gekennzeichnet, dass in den Werkzeugmagazinen (2) eine Anzahl Werkzeuge (5) in einer Reihe angeordnet sind.

5. Werkzeugspeicher nach einem der Ansprüche 1 bis 4, dadurch gekennzeichnet, dass die Werkzeugmagazine (2) unterschiedliche Breite aufweisen.

6. Werkzeugspeicher nach einem der Ansprüche 1 bis 5, dadurch gekennzeichnet, dass der Rotor (11) durch einen motorischen Antrieb (17) im Uhrzeiger- und Gegenuhrzeigersinn drehbar und in seiner Geschwindigkeit in Stufen oder stufenlos regelbar ist.

7. Verfahren zum Betrieb eines Werkzeugspeichers nach Anspruch 1, dadurch gekennzeichnet, dass zur Entnahme eines Werkzeuges (5) aus dem Werkzeugspeicher durch ein Handhabungsgerät (41) die Werkzeugmagazine (2) zunächst durch die erste Greifervorrichtung (25) an dem Rand des Sektors (8) blockiert und die zweite Greifervorrichtung durch den Rotor zu dem das benötigte Werkzeug tragenden Werkzeugmagazin und dieses Magazin durch die zweite Greifervorrichtung (35) mit dem Rotor (11) verbunden wird, worauf nach Oeffnen der ersten Greifervorrichtung die Werkzeugmagazine so lange rotiert werden, bis das gewählte Werkzeugmagazin an der Entnahmestelle angehalten und durch die erste Greifervorrichtung festgehalten wird.

8. Verfahren nach Anspruch 7, dadurch gekennzeichnet, dass der magazinfreie Sektor (8) nach dem Blockieren des gewählten Werkzeugmagazins (2) an der Entnahmestelle durch selbsttätiges Weiterlaufen und durch Reibungsschluss mit dem Rotor (11) der nicht gewählten Werkzeugmagazine auf dem Rotor erneut gebildet und durch die zweite Greifervorrichtung (35) überwacht wird.

9. Verfahren nach Patentanspruch 7 oder 8, dadurch gekennzeichnet, dass das in der Entnahmestelle befindliche Werkzeugmagazin (2) für den Werkzeugwechsel in die radiale oder die tangentiale Richtung zum Werkzeugspeicher in die horizontale Lage geschwenkt wird.

## Claims

1. Tool store for machine tools, in particular numerically controlled processing machines for storing tools (5) arranged on tool magazines (2) and for the removal and return of the tools (5) by means of a manipulation device, with a stationary frame (28) and a vertical column (1) fastened to the floor, to which column there is rotatably mounted a cylindrical rotor (11), to which the tool magazines (2) are fastened, characterized in that the tool magazines (2) are displaceable in the circumferential direction and, abutting one another by means of running gear (22, 23) which is incorporated by circular running paths (12, 13) at the ends of the rotor (11), are hung up on the same, so that subsequently they form a magazine-free sector (8) at a loading and unloading position for the loading and unloading of the rotor with tool magazines (2) and for the facilitated access of the manipulation device to the tools (5), and, moreover, two gripping devices are present, of which a first gripping device (25) for fixing a tool magazine (2) to the edge of the magazine-free sector (8) is fastened to the stationary frame (28) and a second gripping device (35) for selecting, fixing and fetching a tool magazine (2) for the first gripping device (25) is fastened on the rotor (11).

2. Tool store according to claim 1, characterized in that the first gripping device (25) comprises two lifting units (26, 27), which have grips (29, 30) at their ends, the grips engaging on gripping plates (7) at the ends of the tool magazines (2) for the transportation of the tool magazines into the loading and unloading position.

3. Tool store according to claim 1, characterized in that the second gripping device (35) comprises a carrier rod (36) and gripping forks (37, 38) arranged at its ends and is connected to a lifting unit (39) arranged at the rotor (11), by means of which lifting unit (39) the second gripping device can be lifted into a position (34) fixing a tool magazine (2) to the rotor (11).

4. Tool store according to one of claims 1 to 3, characterized in that a number of tools (5) are arranged in a row in the tool magazines (2).

5. Tool store according to one of claims 1 to 4, characterized in that the tool magazines (2) have differing widths.

6. Tool store according to one of claims 1 to 5, characterized in that the rotor (11) is rotatable by a motor drive (17) in clockwise and anti-clockwise direction and can be regulated in its speed in stages or continuously.

7. Process for the operation of a tool store according to claim 1, characterized in that to remove a tool (5) from the tool store by means of a manipulation device (41) the tool magazines (2) are first of all blocked by the first gripping device (25) at the edge of the sector (8) and the second gripping device, by means of the rotor, is connected to the tool magazine carrying the required tool and this magazine, by means of the second gripping device (35), is connected to the rotor (11), whereupon, after the opening of the first gripping device the tool magazines are rotated until the selected tool magazine is stopped at the removal point and is secured by the first gripping device.

8. Process according to claim 7, characterized in that after the blocking of the selected tool magazine (2) at the removal point through automatic running-on and through friction contact with the rotor (11) of the tool magazines on the rotor which were not selected, the magazine-free sector (8) is formed anew and is monitored by the second gripping device (35).

9. Process according to claim 7 or 8, characterized in that the tool magazine (2) located in the removal point is pivoted for tool exchange into the horizontal position into the radial or the tangential direction of the tool store.

**Revendications**

1. Stockeur d'outils pour machines-outils, notamment pour machines à usiner à commande numérique, en vue du stockage d'outils (5) placés dans des magasins à outils (2) et du prélèvement et de la restitution des outils (5) au moyen d'un manipulateur, comportant un bâti (28) fixe et un montant (1) vertical, fixé côté fond, sur lequel est monté tournant un rotor (11) en forme de rouleau, sur lequel sont fixés les magasins à outils (2), caractérisé en ce que les magasins à outils (2) sont suspendus au rotor (11), l'un contre l'autre, de manière à pouvoir se déplacer dans la direction périphérique, au moyen de mécanismes de roulement (22, 23) qui sont logés par des voies de roulement (12, 13) circulaires aux extrémités du rotor (11), de manière à former ensuite, à un poste de chargement et de déchargement pour le chargement et le déchargement du rotor avec des magasins à outils (2) et pour faciliter l'accès du manipulateur aux outils (5), un secteur (8) sans magasin et de manière en outre qu'il existe deux dispositifs à pince dont un premier dispositif à pince (25) pour la fixation d'un magasin à outils (2) sur le bord sans magasin du secteur (8), sur le bâti (28) fixe et un deuxième dispositif à pince (35) pour chercher, fixer et apporter un magasin à outils (2) au premier dispositif à pince (25), est fixé sur le rotor (11).

**2.** Stockeur d'outils selon la revendication 1, caractérisé en ce que le premier dispositif à pince (25) est constitué de deux unités de levage (26, 27) qui comportent à leurs extrémités des pinces (29, 30) qui agissent sur des plaques de pince (7) aux extrémités des magasins à outils (2), en vue du transport des magasins à outils vers le poste de chargement et de déchargement.

**3.** Stockeur d'outils selon la revendication 1, caractérisé en ce que le deuxième dispositif à pince (35) est constitué d'une tringle de support (36) et de fourches (37, 38) placées à ses extrémités et est relié à un mécanisme de levage (39) placé sur le rotor, par lequel le deuxième dispositif à pince peut être relevé dans une position fixant un magasin à outils (2) sur le rotor (11).

**4.** Stockeur d'outils selon l'une des revendications 1 à 3, caractérisé en ce que dans les magasins à outils (2) un certain nombre d'outils (5) sont disposés sur une rangée.

**5.** Stockeur d'outils selon l'une des revendications 1 à 4, caractérisé en ce que les magasins à outils (2) présentent des largeurs différentes.

**6.** Stockeur d'outils selon l'une des revendications 1 à 5, caractérisé en ce que le rotor (11) peut tourner, par un entraînement motorisé (17), dans le sens des aiguilles d'une montre et dans le sens contraire et en ce que sa vitesse est réglable par paliers ou en continu.

**7.** Procédé pour l'exploitation d'un stockeur d'outils selon la revendication 1, caractérisé en ce que pour le prélèvement d'un outil (5) dans le stockeur d'outils par un manipulateur (41), les magasins à outils (2) sont tout d'abord bloqués par le premier dispositif à pince (25) sur le bord du secteur (8) et le deuxième dispositif à pince par le rotor, par rapport au magasin à outils portant l'outil demandé et en ce que ce magasin est relié par le deuxième dispositif a pince (35) avec le rotor (11), après quoi, après ouverture du premier dispositif à pince, les magasins à outils tournent jusqu'à ce que le magasin sélectionné s'arrête au poste de prélèvement et soit maintenu par le premier dispositif à pince.

**8.** Procédé selon la revendication 7, caractérisé en ce que le secteur (8) sans magasin est à nouveau formé sur le rotor, après blocage du magasin à outils (2) sélectionné au poste de prélèvement, par rotation automatique et par assemblage par friction avec le rotor (11), des magasins à outils non sélectionnés, et contrôlé par le deuxième dispositif à pince (35).

**9.** Procédé selon la revendication 7 ou 8, caractérisé en ce que le magasin à outils (2), se trouvant au poste de prélèvement, est pivoté en position horizontale, radialement ou tangentiellement par rapport au stockeur d'outils, pour le changement d'outil.

FIG. 2

FIG. 1

FIG. 3

FIG. 4

FIG. 5

FIG. 6

FIG. 8

FIG. 7